# EUROPEAN PATENT SPECIFICATION

(11) **EP 2 195 206 B1**
(45) Date of publication and mention of the grant of the patent: **29.06.2011**
(21) Application number: 08805012.5
(22) Date of filing: 02.10.2008
(51) Int. Cl.: B60R 21/264, B60R 21/26, B60R 21/272

(54) **GAS GENERATOR WITH A DISCOID SHAPE**
GASERZEUGER MIT SCHEIBENFORM
GÉNÉRATEUR DE GAZ DISCOÏDE

(30) Priority: 03.10.2007 FR 0706916
(43) Date of publication of application: 16.06.2010
(73) Proprietor: Autoliv Development AB, 447 83 Vårgårda (SE)
(72) Inventor: CORNEC, Sébastien, F-29000 Quimper (FR); ROGNANT, Erwan, F-29590 LE FAOU (FR); DUBOIS, Nicolas, F-29160 Crozon (FR); PERREON, Julien, F-29160 Crozon (FR)
(74) Representative: Branger, Jean-Yves
(86) International application number: PCT/EP2008/063229
(87) International publication number: WO 2009/043904

(56) References cited:
- EP-A- 0 012 627
- US-A- 4 578 247
- US-A- 5 501 487
- US-A- 5 582 427
- US-A- 5 844 164
- US-A1- 2001 048 218
- US-A1- 2004 145 166

## Description

The present invention concerns a pyrotechnic gas generator intended for automobile safety, which has a discoid or roughly discoid shape. US 2004/0 145 166 describes a generator according to the preamble of claim 1.

The latter expression means a generator whose largest diameter is greater than its longitudinal dimension. In other words, it is a case of a generator that is wider than long and has the shape of a disk.

For purely indicative purposes, the diameter of such a generator is around 60 mm while its longitudinal dimension is around 40 mm.

Many prior documents relate to such generators.

Among these, the document US-A-6 966 578 relates to a gas generator that comprises a combustion chamber in which there is present an initiator associated with at least one pyrotechnic charge, as well as a diffusion chamber that receives the gases generated by said charge and transfers them to the outside.

It comprises a box consisting of a bottom and a lateral rotating wall, its top being open, as well as a cover formed by a bottom and a lateral rotating wall provided with at least one orifice, its bottom being open, this cover being fixed sealingly by its lateral wall to the lateral wall of said box.

An annular-shaped partition, which comprises an axial conduit and a transverse peripheral skirt, bears on the bottom and the lateral wall of the box. This partition delimits with the box an annular combustion chamber in which an initiator is present.

The structure of such an initiator is complex, essentially because of the particular shape of the partition. In addition, the manufacture of this partition necessarily has effects on the cost price of the whole.

Although it does not have a discoid shape, the generator described in the document US-A-5 924 727 comprises a diffusion chamber situated "above" a combustion chamber, as in a discoidal generator.

This generator is formed by an elongate tube of elliptical cross section, a region of the curved wall of which is provided with openings forming nozzles. A piece that delimits a diffusion chamber is attached to this region.

There also, the structure of the generator is complex, so that its cost price is high.

A generator comprising a box, a cover and a partition force-fitted in the box is described in US-A-4 578 247 Such a method of assembly does not guarantee a correct seal. In addition, while the generator is functioning, the forces due to the pressure rise in the combustion chamber are directed in the opposite direction to the fitting, which reduces the resistance of the partition to pressure.

US-2001/048218 describes, in the embodiment in figures 4 (A) and (B), a generator also comprising a box, a cover and a partition. The method of assembly is only partially described. However, it appears that the partition is fixed inside the cover sealingly.

In US-A-5 844 164, there is described a structure similar to the previous ones in which the box, partition and cover are assembled by a single crimping operation. While the generator is operating, this assembly must therefore withstand all the mechanical forces. In addition, it must be doubly sealed (firstly between the box and the partition and secondly between the partition and the cover) in order to avoid contamination of the pyrotechnic charge by external moisture.

All these structures have the common point of being complex and/or using assemblies having drawbacks.

The present invention aims to resolve these problems by proposing a generator of the discoid type, of small dimensions, with a simple structure, easy to manufacture, able to be used in complete safety, with a reduced cost price and which makes it possible to generate safety bag inflation gases, where necessary progressively.

The invention therefore relates to a pyrotechnic gas generator according to claim 1.

Said partition therefore has an extremely simple shape, so that it is very easy to manufacture, at a reduced cost price.

According to other advantageous and non-limitative characteristics:
- the bottom of said box is convex, its convex face being directed towards the outside;
- the lateral wall of said cover is extended by a collar directed towards the outside, which extends parallel or substantially parallel to its bottom;
- it comprises a single combustion chamber, said initiator being centred on its longitudinal centre axis, and said partition is convex in its central part facing said initiator, its convex face being turned towards said diffusion chamber, a series of orifices forming nozzles extending around the dome thus formed;
- said orifice forming a nozzle is closed by a seal disposed on the same side as said diffusion chamber, which yields as soon as a pressure of a predetermined value is reached in said combustion chamber;
- it also comprises a relay pyrotechnic charge disposed close to said initiator, a cap covering said relay charge and initiator, this cap comprising at least one orifice for communication with said combustion chamber;
- said relay charge is contained in a box that yields beyond a certain pressure, produced for example in the form of a thin metal film;
- it has the combination of following characteristics:
   - said box - referred to as the first box - encloses a second box disposed coaxially;
   - the second box delimits with said partition a main combustion chamber;
   - the first and second boxes delimit with said partition a secondary annular-shaped chamber;
   - the lateral wall of the second box comprises at least one orifice forming a nozzle for putting said main combustion chamber in communication with the secondary chamber;
   - said initiator is positioned in said main combustion chamber;
   - said partition has in it a plurality of orifices forming nozzles, at least one of which puts the main combustion chamber in communication with the diffusion chamber, while at least one other puts the secondary chamber in communication with the diffusion chamber;
- said second box is also fixed to said partition by means of a friction weld;
- said secondary chamber is a combustion chamber that encloses at least pyrotechnic charge;
- the orifices forming nozzles of said lateral wall and partition are closed by seals, those equipping the orifices of said partition yielding under the effect of a pressure lower than that of the orifices in said lateral wall;
- said secondary chamber constitutes an enclosure for storing gas under pressure.

Other characteristics and advantages of the present invention will emerge from a reading of the following description of certain preferential embodiments. This description will be given with reference to the accompanying drawings, in which:
- figure 1 is a view, in a median longitudinal cross-sectional plane, of a first embodiment of a generator according to the invention;
- figure 2 is a view similar to figure 1 of a second embodiment of the generator;
- figure 3 is a view similar to figure 1 of another embodiment of the generator, this being more specifically intended to inflate a front safety cushion equipping the driving position in a vehicle.
- figure 3A is a detailed view in cross section of part of the generator in figure 3;
- figure 4 is a view of a variation of the generator in figure 3 especially intended to inflate a front safety cushion equipping the front passenger seat of a vehicle;
- figures 5 to 7 are views of the generator in figure 3, intended to illustrate the process of releasing the gases after its initiator has been triggered.

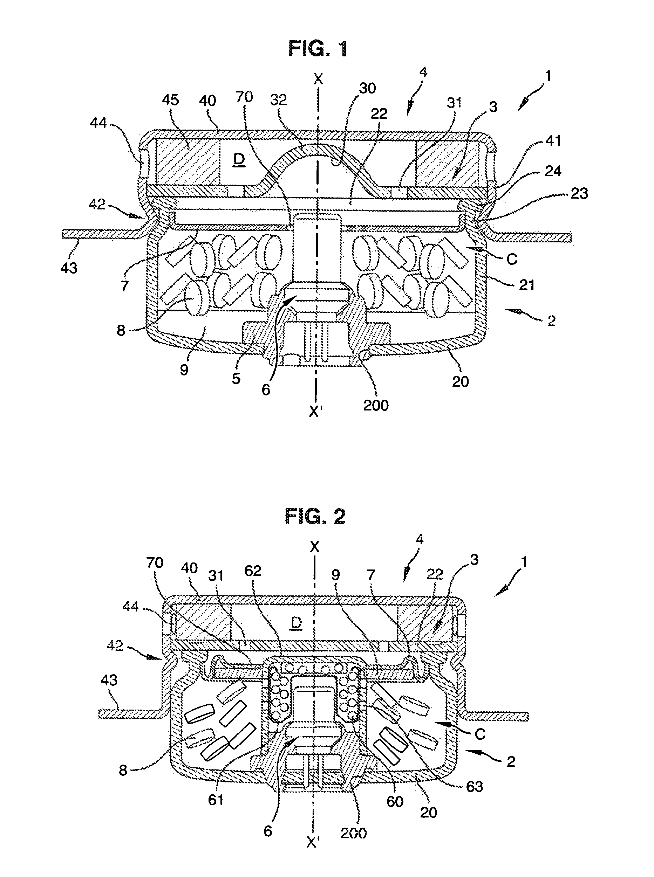

The generator in figure 1 has a longitudinal axis of symmetry X-X'.

It consists essentially of a box 2, a partition 3 and a cover 4, which are all produced from metal.

The box 2 consists of a bottom 20 that extends generally transversely with respect to the aforementioned axis. It is slightly convex, its convex face being turned towards the outside. The advantage of such a shape will be explained later in the description.

This bottom is connected to and is in one piece with a lateral wall 21, centred on the axis X-X'. The top part of this wall, referenced 23, has a diameter slightly less than the diameter of the remaining part.

The top of this box, referenced 22, is open.

The bottom 20 has an axial opening 200 with a circular contour in which the support 5 of an electropyrotechnic initiator 6 is partially engaged. These elements, the structure of which is known per se, will not be described any further.

According to a variant embodiment, the initiator is radial, that is to say the hot gases and particles of the initiator are projected perpendicular to its axis. An initiator of this type is described in the document FR 2877082.

The support is fixed to the bottom 20, for example by laser welding or resistance welding.

In another variant, not shown, the initiator can be insert moulded directly on the bottom 20. This variant makes it possible to reduce the number of components.

The total height of the support 5 and initiator 6 is such that the top of the latter is slightly recessed with respect to the top 22 of the box 2.

In the latter, surrounding the support 5, a material 9 for fixing a pyrotechnic charge 8 is provided. It is a question here of a charge, for example propellant, in the form of pellets. In embodiments that are not shown, it could be a case of a charge in the form of a single-piece block.

Through the top 22 of the box there is forcibly engaged in the latter a grille 7. It is open at its centre to allow passage of the top part of the initiator.

The term "grille" means a perforated structure element where the mesh opening is sufficient to allow gases to pass but which is able to retain portions of pellets that constitute the pyrotechnic charge 8 during combustion.

To the box 2 there is fixed a partition 3 that, with the exception of its central part, is flat and extends parallel to the bottom 20.

It has neither extension nor projection towards the inside of the box 2, and this is valid for its periphery. In other words it has, seen from above, a circular contour and its diameter corresponds to the outside diameter of the box.

Preferably the box and partition are assembled by friction welding, which explains the presence of a bead 24 representing the top edge of the lateral wall 21.

As indicated above, the partition 3 is flat, with the exception of its central part, which is convex, the dome 30 thus formed having its convex face turned opposite to the box 2.

The dome therefore extends opposite the initiator 6.

The partition 3 has in it a series of orifices 31 that form nozzles.

In the embodiment depicted here, the orifices extend in the flat part of the partition, around the dome 30. They are preferably angularly distributed in a regular manner. In any event, no orifice 30 exists opposite the initiator.

These orifices can be all of the same diameter or of different diameters. By opting for different diameters, staged nozzles are obtained. The nozzles then open according to the operating pressure in the combustion chamber. The higher the pressure, the greater the number of nozzles open.

Although this is not visible in figure 1, a seal is fixed to the partition, covering the dome 30 and the orifices 31 that encompass it. It is preferably a case of a seal in a single piece, the periphery of which is segmented radially in order to constitute "petals" that each cover an orifice 31.

Finally, the present generator comprises a cover 4 consisting of a bottom 40 and a lateral wall 41.

The bottom 40 is flat and extends perpendicular to the axis X-X', while the lateral wall 41, centred on the aforementioned axis, extends perpendicular to the bottom. This wall 41 continues in a peripheral collar 43, roughly flat and parallel to the bottom 40, which serves for fixing the generator to a support.

The diameter of the cover is chosen so as to allow its fixing, by its lateral wall 41, to the lateral wall 21 of the box 2, and this sealingly. However, there is no connection between the partition 3 and the cover 4.

Here the cover 4 is crimped to the top part of the box 2, which results in the presence of an asymmetric groove 42.

The lateral wall 41 comprises a series of orifices 44 forming discharge openings. They are regularly distributed.

Inside the cover 4 there is placed an annular filtration material 45, disposed opposite the orifices 44, able to condense and retain any undesirable particles and cool the gases, as is well known according to the prior art.

In order to improve filtration, it is possible to add to the bottom 40 a circular wall forming a deflector. This wall is perpendicular to the bottom and is placed upstream of the filtration material. The height of this wall is less than the height of the filtration material.

By placing the filtration means outside the combustion chamber, the present applicant has found that this allows a reduction in the volume of the whole. And this reduction makes it possible to reduce the charge of the initiator.

The box 2 and partition 3 delimit a combustion chamber C, while the partition 3 and the cover 4 delimit a diffusion chamber D.

The functioning of such a generator is as follows.

An ignition current is transmitted to the initiator 6, via the pins that equip it.

This causes the start of the combustion of the pyrotechnic charge 8, which generates gases and causes the pressure in the chamber C to rise.

This generates many forces on the box 2, which may then have a tendency to deform. This phenomenon is combated by having provided, as indicated above, for the bottom 20 to be roughly convex.

As soon as the pressure has reached a predetermined value, the seal that closes off the orifices 31 forming nozzles yields so that the gases generated previously rush therein, invade the diffusion chamber D, are filtered by the material 45 and emerge from the generator 1 through the openings 44 in order to inflate a bag, not shown.

This generator is particularly well suited for inflating a safety bag equipping the driving position of a vehicle, because of its compactness.

Any particles that escape from the combustion chamber C and result from the disintegration of the initiator would be retained by the dome of the partition 3.

The orifices forming nozzles 31 are for example six or eight in number.

This makes it possible to ensure an even distribution of the gas flow in the chamber D and to reduce the stress on the bag during its inflation. In addition, in so far as none of these orifices is situated facing the initiator, it is thus ensured that unsealing will not occur too soon.

Moreover, such a generator has neutral thrust characteristics since the thrusts caused by each of the jets escaping from the diffusions holes 44 are cancelled out in pairs.

The generator of figure 2 has many common points with the one described previously.

Only the characteristics that differentiate it from it will therefore be dealt with below.

This generator 1 comprises a relay pyrotechnic charge 60 that is disposed close to the initiator 6. More precisely, it encompasses and covers the cap of the initiator.

The charge is contained in a box 61 able to yield beyond a certain pressure. It is for example produced in the form of a thin metal film.

The initiator/relay charge assembly is covered by a cylindrically shaped metal cap 62, its open bottom being fixed to the bottom of the initiator.

This cap 62 comprising at least one orifice 63 for communication with the combustion chamber. In the embodiment described here, it is a case of several radially oriented orifices distributed in a regular manner in the longitudinal wall of the cap.

The top of the cap 62 passes through the central opening of a grill 7, below which there extends a material 9 for fixing the pyrotechnic charge 8 contained in the chamber C.

Moreover, the partition 3 is flat and provided with orifices 31 that form nozzles which, seen from above, constitute a circle centred on the axis X-X'. The diameter of this notional circle is greater than the diameter of the cap. In other words, there is no orifice 31 opposite this cap 60.

The functioning of this generator is as follows.

An ignition current is transmitted to the initiator 6 via the pins that equip it.

The gases and particles released stress the box 61 and make the pressure rise in the cap 60, so that the pressure increases. The box 61 then yields, so that the relay charge 60 combusts. The hot gases generated escape through the orifices 63 and enter the combustion chamber C, where they cause combustion of the charge 8.

Although this is not shown in the figure, the orifices 31 are closed by seals yielding beyond a certain pressure.

Consequently, since a sufficient pressure is obtained in the chamber C, the seals yield and the gases rush into the diffusion chamber D, are filtered by the material 45 and emerge from the generator 1 through the openings 44.

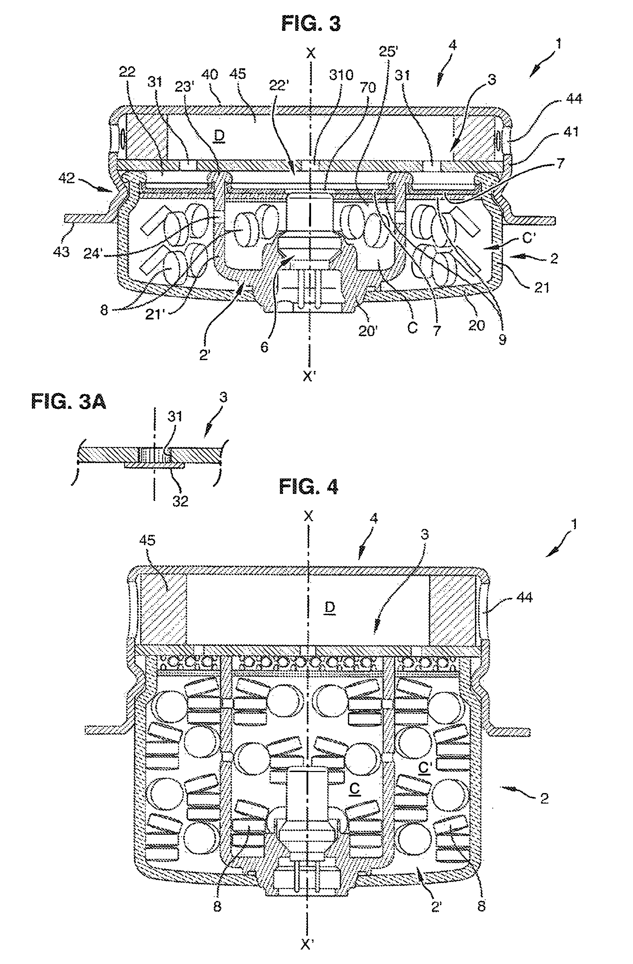

The generator shown in figure 3 has roughly the same structure as that in figure 1.

Under these conditions, the identical elements will not be described again.

This generator is remarkable through the fact that the box 2, referred to for convenience as the "first box", encloses a second box 2' disposed coaxially.

This second box 2' has roughly the same shape as the previous one. Its bottom, referenced 20', includes an initiator support 6.

It is also fixed to the partition 3' by the free end of its lateral wall 21'. A bead 23' in this zone represents the connection thus achieved (friction welding).

Two grilles 7, one circular, the other annular, are engaged in the openings 22 and 22' in the boxes 2 and 2'. The central grill has an axial opening 70 for passage of the top of the initiator 6.

In the lateral wall 21' of the second box there are formed orifices forming nozzles 24' that are closed by a seal 25' able to yield under a certain pressure.

The wall 3, unlike the previous one, is flat.

It has a small orifice forming a nozzle 310, placed at its centre, opposite the initiator 6, as well as a series of supplementary orifices 31, also forming nozzles, distributed in a circle and disposed vertically in line with the first box 2.

As shown in figure 3A, each orifice 31 is closed by a seal 32. This also applies to the orifice 310, although this has not been shown.

The seals 32 are configured to yield as a pressure lower than that necessary for making the seal 25' yield.

The second box 2' delimits with the partition 3 a main combustion chamber C while the first and second boxes 2 and 2' delimit with said partition 3 a second annular-shaped chamber C'.

A fixing material 9 extends above the two pyrotechnic charges 8 present in the chambers C and C'.

The generator in figure 4 has the same structure as the one that has just been described. It is distinguished from it solely by the fact that it has a longitudinal dimension (along the axis X-X') greater than that of the generator in figure 3. By way of indication, this dimension is around 60 mm while that of the previous generator is approximately 40 mm (the same diameter for both, around 70 mm).

This generator, because of its greater internal volume, is particularly adapted for equipping a safety cushion situated opposite the seat occupied by a vehicle passenger. As for the one in figure 3, this is perfectly suited for equipping the driving position.

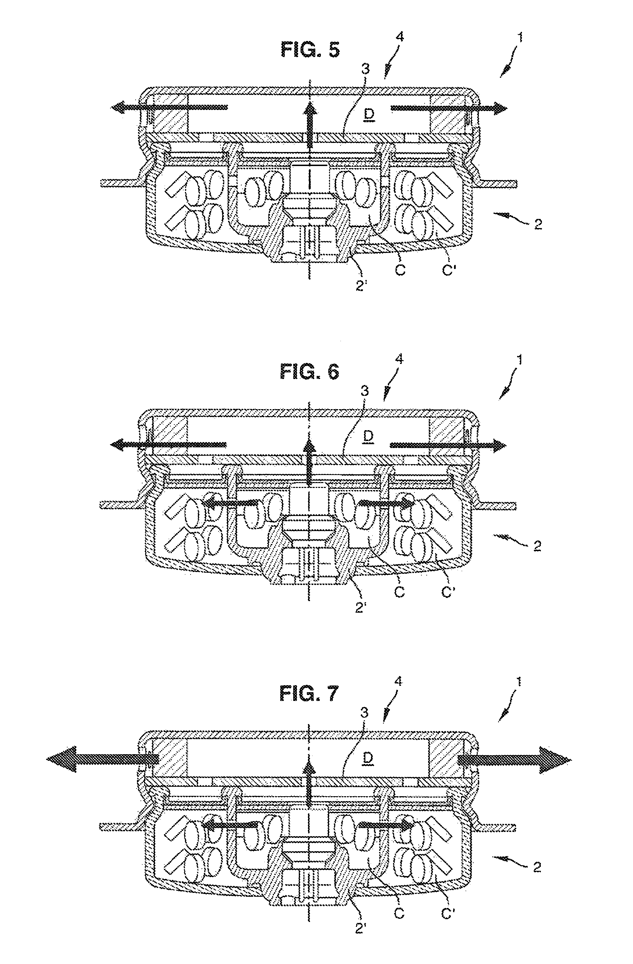

Reference will now be made to figures 5 and 7 to explain the functioning of the generator of figure 3. However, the one in figure 4 functions in the same way.

An ignition current is transmitted to the initiator 6 via the pins that equip it.

This causes the start of the combustion of the pyrotechnic charge 8 contained in the chamber C, which generates gases and makes the pressure in it rise.

As soon as a predetermined pressure is reached, the seal that closes off the central orifice 310 forming a nozzle yields, and the gases rush therein. They are filtered in the diffusion chamber D and escape through the openings 44. This is the situation illustrated in figure 4.

However, the cross section of the orifice 310 not being sufficient for all the gases generated in the chamber 3 to be able to escape therefrom as they go along, the pressure rises progressively therein until it reaches the pressure at which the seal 25', which closes off the orifices 24', yields.

These radial nozzles allow free passage to the hot gases, which rush into the chamber C' and initiate the pyrotechnic charge 8 that it contains.

This is the situation in figure 6.

Once again, the pressure rises in the chamber C' so that the seals 32 of the orifices 31 yield in their turn.

The gases generated by the combustion of the charge 8 present in the chamber C' enter the diffusion chamber D, mix with those coming from the chamber C and emerge from the generator through the openings 44. This is the situation in figure 7.

A progressive inflation of the bag associated with the generator is thus achieved.

Such a structure can easily be adapted to a hybrid generator of the solid/solid type.

All the pressed or forged parts that make it up are simple.

The second box 2' consists of a piece obtained by forging and reworked by machining. Its cost price is reduced.

In addition, the friction welding of the partition 3 on the two boxes 2 and 2' does not pose any particular problem.

In the embodiment in figure 3, a seal 25' is used to "isolate" the chambers C and C' from each other. In a variant embodiment that is not shown, it is possible to dispense with such a seal and package the charge contained in the chamber C in a sealed box, yielding at a certain pressure.

It is also possible to make use of a relay or a pyrotechnic delay.

It can be envisaged reducing the thickness of the walls that make up the boxes 2 and 2'. This is because the box 2' serves as a "stiffening pillar" that prevents the assembly from deforming, under the effect of internal pressure.

The fact that a "first stage" (the chamber C and its charge 8) is used for initiating a "second stage" (the chamber C' and its charge 8) makes it possible to use a less heavy pyrotechnic chain. This is because it is not necessary to use a relay charge: a single initiator suffices.

The pyrotechnic charges present in the two combustion chambers can consist of propellants of different natures and/or forms.

## Claims

1. Pyrotechnic gas generator (1) intended for automobile safety, which has a disk or generally disk shape, i.e. of which the largest diameter is greater than the longitudinal dimension thereof and which comprises at least one combustion chamber (C) wherein an initiator (6) associated with at least one pyrotechnic charge (8) is present, as well as a diffusion chamber (D) that receives the gases generated by said charge (8) and transfers them to the exterior, this generator including:
- a box (2) constituted of a bottom (20) and of a lateral rotating wall (21), the top thereof (22) being open;
- a cover (4) formed of a bottom (40) and a lateral rotating wall (41) provided with at least one orifice (44), the base thereof being open, this cover (4) being tightly fixed by the lateral wall thereof (41) to lateral wall (21) of said box (2), said orifice (44) formed in the lateral wall (41) of said cover (4) forming an opening for the evacuation of said gases towards the exterior,
- a partition (3) which is fixed sealingly to the top edge of this box (2) and which seals its top (22), without extension or protrusion beyond the periphery thereof, this partition (3) being pierced by at least one orifice (31) forming a nozzle, without fixing between the cover and the partition,
said box (2) and said partition (3) being fixed to one another by means of friction welding,
**characterized by** the fact that
the partition does not have an extension or protrusion towards the interior of the box (2) and in that the box (2) and the partition (3) delimiting said combustion chamber (C), while partition (3) and cover (4) delimit said diffusion chamber (D).

2. Generator according to claim 1, **characterized by** the fact that the bottom (20) of said box (2) is convex, with the convex side therein being oriented towards the exterior.

3. Generator according to one of the preceding claims, **characterized by** the fact that lateral wall (41) of said cover (4) is extended by a collar (43) oriented towards the exterior, which extends parallel or substantially parallel to the bottom thereof (40).

4. Generator according to one of the preceding claims, which includes a single combustion chamber (C), said initiator (6) being centered on the longitudinal center axis (X-X'), **characterized by** the fact that said partition (3) is convex in its central portion across from said initiator, with the convex side being turned towards said diffusion chamber (D), and that it comprises a series of orifices (31) forming nozzles, which extend around dome (30) thus formed.

5. Generator according to one of the preceding claims, **characterized by** the fact that said orifice (31) forming a nozzle is closed by a seal (32) arranged on the side of said diffusion chamber (D), which releases as soon as pressure of a predetermined value is reached in said combustion chamber (C).

6. Generator according to one of claims 1 to 5, **characterized by** the fact that it also includes a pyrotechnic charge relay (60) arranged in the vicinity of said initiator (6), a cap (62) hooding said charge relay (60) and initiator (6), this cap comprising at least one communication orifice (63) with said combustion chamber (C).

7. Generator as claimed in the preceding claim, **characterized by** the fact that said charge relay is contained in a box (61) which releases beyond a certain pressure, realized for example in the form of a thin metal film.

8. Generator according to one of the preceding claims, **characterized by** the fact that:
- said box (2) - called the first box - encloses a second box (2') arranged coaxially;
- second box (2') delimits with said partition (3) a main combustion chamber (C);
- first (2) and second (2') boxes delimit with said partition (3) a secondary chamber (C') of annular form;
- lateral wall (21') of the second box (2') comprises at least one orifice (24') forming a nozzle for putting said main combustion chamber (C) in communication with the secondary chamber (C');
- said initiator (6) is positioned in said main combustion chamber (C);
- said partition (3) is pierced by a plurality of orifices (31) forming nozzles, of which at least one puts the main combustion chamber (C) in communication with diffusion chamber (D), while at least one other puts secondary chamber (C') in communication with diffusion chamber (D).

9. Generator according to claims 1 and 8 taken together, **characterized by** the fact that said second box (2') is also fixed to said partition (3) by means of friction welding.

10. Generator according to one of claims 8 or 9, **characterized by** the fact that said secondary chamber (C') is a combustion chamber that encloses at least one pyrotechnic charge (8).

11. Generator as claimed in the preceding claim, **characterized by** the fact that orifices (24'; 31) forming nozzles of said lateral wall (21 ') and partition (3) are closed by seals (25'; 32), those equipping orifices (31) of said partition (3) releasing under the effect of a pressure less than that of orifices (24') of said lateral wall (21 ').

12. Generator according to one of claims 9 or 10, **characterized by** the fact that said secondary chamber (C') constitutes a pressurized gas storage enclosure.

## Patentansprüche

1. Pyrotechnischer Gaserzeuger (1), der für die Automobilsicherheit bestimmt ist, der eine Scheibe oder im Allgemeinen eine Scheibenform aufweist, d.h. deren längster Durchmesser größer als die Längsabmessung ist, und die wenigstens eine Verbrennungskammer (C) umfasst, wobei ein zur wenigstens einen pyrotechnischen Ladung (8) gehörender Zünder (6) vorliegt, sowie eine Diffusionskammer (D), die die von der Ladung (8) erzeugten Gase aufnimmt und sie nach außen ableitet, wobei dieser Erzeuger umfasst:
- eine Box (2), die aus einer Unterseite (20) und einer rotierenden Seitenwand (21) gebildet ist, wobei ihrer Oberseite (22) offen ist;
- eine Abdeckung (4), die aus einer Unterseite (40) und einer rotierenden Seitenwand (41) gebildet ist, die mit wenigstens einer Öffnung (44) ausgestattet ist, wobei ihr Boden offen ist, wobei diese Abdeckung (4) durch ihre Seitenwand (41) an der Seitenwand (21) der Box (2) eng befestigt ist, wobei die Öffnung (44), die in der Seitenwand (41) des Abdeckung (4) gebildet ist, eine Öffnung zur Evakuierung der Gase nach außen bildet,
- eine Abtrennung (3), die dicht an der Oberkante dieser Box (2) befestigt ist und die ihre Oberseite (22) ohne Erweiterung oder Vorstehung über den Umfang abdichtet, wobei diese Abtrennung (3) durch wenigstens eine Öffnung (31) durchlöchert ist, die eine Düse bildet, ohne eine Befestigung zwischen der Abdeckung und der Abtrennung, wobei die Box (2) und die Abtrennung (3) durch Reibschweißen aneinander befestigt sind,
**dadurch gekennzeichnet, dass**
die Abtrennung keine Erweiterung oder Vorstehung in Richtung des Inneren der Box (2) aufweist und die Box (2) und die Abtrennung (3) die Verbrennungskammer (C) abgrenzen, während die Abtrennung (3) und die Abdeckung (4) die Diffusionskammer (D) abgrenzen.

2. Erzeuger gemäß Anspruch 1, **dadurch gekennzeichnet, dass** die Unterseite (20) der Box (2) konvex ist, wobei die konvexe Seite nach außen orientiert ist.

3. Erzeuger gemäß einem der vorhergehenden Ansprüche, **dadurch gekennzeichnet, dass** die Seitenwand (41) der Abdeckung (4) erweitert wird durch einen Kragen (43), der nach außen orientiert ist, der sich parallel oder im Wesentlichen parallel zu seiner Unterseite (40) erstreckt.

4. Erzeuger gemäß einem der vorhergehenden Ansprüche, der eine einzige Verbrennungskammer (C) umfasst, wobei der Zünder (6) auf der Längsmittelachse (X-X') zentriert ist, **dadurch gekennzeichnet, dass** die Abtrennung (3) in ihrem Mittelabschnitt gegenüber dem Zünder konvex ist, wobei die konvexe Seite in Richtung der Diffusionskammer (D) gedreht ist, und dass er eine Reihe von Düsen bildenden Öffnungen (31) umfasst, die sich um die derart gebildete Kuppel (30) erstrecken.

5. Erzeuger gemäß einem der vorhergehenden Ansprüche, **dadurch gekennzeichnet, dass** die eine Düse bildende Öffnung (31) durch eine Dichtung (32) geschlossen ist, die auf der Seite der Diffusionskammer (D) angeordnet ist, die freigibt, sobald ein Druck eines vorbestimmten Werts in der Verbrennungskammer (C) erreicht ist.

6. Erzeuger gemäß einem der Ansprüche 1 bis 5, **dadurch gekennzeichnet, dass** er auch ein pyrotechnisches Ladungsrelais (60) umfasst, das in der Nähe des Zünders (6) angeordnet ist, wobei eine Kappe (62), das Ladungsrelais (60) und den Zünder (6) bedeckt, wobei diese Kappe wenigstens eine Verbindungsöffnung (63) mit der Verbrennungskammer (C) umfasst.

7. Erzeuger gemäß einem der vorhergehenden Ansprüche, **dadurch gekennzeichnet, dass** das Ladungsrelais in einer Box (61) enthalten ist, die jenseits eines bestimmten Drucks freigibt, realisiert zum Beispiel in der Form einer dünnen Metallfolie.

8. Erzeuger gemäß einem der vorhergehenden Ansprüche, **dadurch gekennzeichnet, dass**:
- die Box (2) - genannt die erste Box - eine zweite, koaxial angeordnete Box (2') einschließt;
- eine zweite Box (2') mit der Abtrennung (3) eine Hauptverbrennungskammer (C) abgrenzt;
- die erste (2) und zweite (2') Box mit der Abtrennung (3) eine sekundäre Kammer (C') von ringförmiger Form abgrenzen;
- eine Seitenwand (21') der zweiten Box (2') wenigstens eine Öffnung (24') umfasst, die eine Düse bildet, um die Hauptverbrennungskammer (C) in Verbindung mit der sekundären Kammer (C') zu setzen;
- der Zünder (6) in der Hauptverbrennungskammer (C) positioniert ist;
- die Abtrennung (3) von einer Vielzahl von Öffnungen (31) durchlöchert ist, die Düsen bilden, von denen wenigstens eine die Hauptverbrennungskammer (C) in Verbindung mit der Diffusionskammer (D) setzt, während wenigstens eine andere die sekundäre Kammer (C') in Verbindung mit der Diffusionskammer (D) setzt.

9. Erzeuger gemäß Ansprüchen 1 und 8 zusammengenommen, **dadurch gekennzeichnet, dass** die zweite Box (2') auch an der Abtrennung (3) mittels Reibschweißen befestigt ist.

10. Erzeuger gemäß einem der Ansprüche 8 oder 9, **dadurch gekennzeichnet, dass** die sekundäre Kammer (C') eine Verbrennungskammer ist, die wenigstens eine pyrotechnische Ladung (8) einschließt.

11. Erzeuger gemäß einem der vorhergehenden Ansprüche, **dadurch gekennzeichnet, dass** die Öffnungen (24', 31), die die Düsen der Seitenwand (21') bilden, und die Abtrennung (3) durch Dichtungen (25'; 32) geschlossen sind, wobei diese bestückenden Öffnungen (31) der Abtrennung (3) unter der Wirkung eines Drucks geringer als der der Öffnungen (24') der Seitenwand (21') freigeben.

12. Erzeuger gemäß einem der Ansprüche 9 oder 10, **dadurch gekennzeichnet, dass** die sekundäre Kammer (C') ein unter Druck stehendes Gasspeichergehäuse darstellt.

## Revendications

1. Générateur pyrotechnique de gaz (1) destiné à la sécurité automobile, qui a une forme discoïde ou généralement discoïde, c'est à dire dont le plus grand diamètre est supérieur à sa dimension longitudinale et qui comporte au moins une chambre de combustion (C) dans laquelle est présente un initiateur (6) associé à au moins une charge pyrotechnique (8), ainsi qu'une chambre de diffusion (D) qui reçoit les gaz générés par ladite charge (8) et les transfère vers l'extérieur, ce générateur comprenant :
- un boîtier (2) constitué d'un fond (20) et d'une paroi latérale (21) de révolution, son sommet (22) étant ouvert ;
- un couvercle (4) formé d'un fond (40) et d'une paroi latérale (41) de révolution pourvue d'au moins un orifice (44), sa base étant ouverte, ce couvercle (4) étant fixé de manière étanche par sa paroi latérale (41) à la paroi latérale (21) dudit boîtier (2), ledit orifice (44) formé dans la paroi latérale dudit couvercle (4) formant une ouverture pour l'évacuation des gaz vers l'extérieur.
- une cloison (3) qui est fixée de manière étanche au chant supérieur dudit boîtier (2) et qui obture son sommet (22), sans prolongement ou saillie ni vers l'intérieur du boîtier (2), ni au-delà de sa périphérie, cette cloison (3) étant percée d'au moins un orifice (31) formant tuyère, sans fixation entre le couvercle (4) et la cloison (3),
ledit boîtier (2) et ladite cloison (3) étant fixés l'un à l'autre au moyen d'une soudure par friction,
**caractérisé par le fait que**
la cloison ne présente pas de prolongement ou de saillie vers l'intérieur du boîtier (2), et que le boîtier (2) et la cloison (3) délimitent ladite chambre de combustion (C), tandis que la cloison (3) et le couvercle (4) délimitent ladite chambre de diffusion (D),

2. Générateur selon la revendication 1, **caractérisé par le fait que** le fond (20) dudit boîtier (2) est bombé, sa face convexe étant dirigée vers l'extérieur.

3. Générateur selon l'une des revendications précédentes, **caractérisé par le fait que** la paroi latérale (41) dudit couvercle (4) se prolonge par une collerette (43) dirigée vers l'extérieur, qui s'étend parallèlement ou sensiblement parallèlement à son fond (40).

4. Générateur selon l'une des revendications précédentes, qui comprend une seule chambre de combustion (C), ledit initiateur (6) étant centré sur son axe médian longitudinal (X-X'), **caractérisé par le fait que** ladite cloison (3) est bombée dans sa partie centrale en regard dudit initiateur, sa face convexe étant tournée vers ladite chambre de diffusion (D), et qu'elle comporte une série d'orifices (31) formant tuyères, qui s'étendent autour du dôme (30) ainsi formé.

5. Générateur selon l'une des revendications précédentes, **caractérisé par le fait que** ledit orifice (31) formant tuyère est fermé par un opercule (32) disposé du côté de ladite chambre de diffusion (D), qui cède dès qu'une pression de valeur prédéterminée est atteinte dans ladite chambre de combustion (C).

6. Générateur selon l'une des revendications 1 à 5, **caractérisé par le fait qu'**il comprend également une charge pyrotechnique relais (60) disposée à proximité dudit initiateur (6), un capuchon (62) coiffant lesdits charge relais (60) et initiateur (6), ce capuchon comportant au moins un orifice (63) de communication avec ladite chambre de combustion (C).

7. Générateur selon la revendication précédente, **caractérisé par le fait que** ladite charge relais est contenue dans un boîtier (61) qui cède au-delà d'une certaine pression, réalisé par exemple sous la forme d'un film métallique fin.

8. Générateur selon l'une des revendications précédentes, **caractérisé par le fait que** :
- ledit boîtier (2) - dit premier boîtier - renferme un second boîtier (2') disposé coaxialement ;
- le second boîtier (2') délimite avec ladite cloison (3) une chambre de combustion principale (C) ;
- les premier (2) et second (2') boîtiers délimitent avec ladite cloison (3) une chambre secondaire (C') de forme annulaire ;
- la paroi latérale (21') du second boîtier (2') comporte au moins un orifice (24') formant tuyère pour la mise en communication de ladite chambre de combustion principale (C) avec la chambre secondaire (C') ;
- ledit initiateur (6) est positionné dans ladite chambre de combustion principale (C) ;
- ladite cloison (3) est percée d'une pluralité d'orifices (31) formant tuyères, dont au moins un met en communication la chambre de combustion principale (C) avec la chambre de diffusion (D), tandis qu'au moins un autre met en communication la chambre secondaire (C') avec la chambre de diffusion (D).

9. Générateur selon les revendications 1 et 8 prises en combinaison, **caractérisé par le fait que** ledit second boîtier (2') est également fixé à ladite cloison (3) au moyen d'une soudure par friction.

10. Générateur selon l'une des revendications 8 ou 9, **caractérisé par le fait que** ladite chambre secondaire (C') est une chambre de combustion qui renferme au moins une charge pyrotechnique (8).

11. Générateur selon la revendication précédente, **caractérisé par le fait que** les orifices (24' ; 31) formant tuyères desdites paroi latérale (21') et cloison (3) sont fermés par des opercules (25' ; 32), ceux équipant les orifices (31) de ladite cloison (3) cédant sous l'effet d'une pression inférieure à celle des orifices (24') de ladite paroi latérale (21').

12. Générateur selon l'une des revendications 9 ou 10, **caractérisé par le fait que** ladite chambre secondaire (C') constitue une enceinte de stockage de gaz sous pression.
